# EUROPÄISCHE PATENTSCHRIFT

(11) **EP 1 066 353 B1**
(45) Veröffentlichungstag und Bekanntmachung des Hinweises auf die Patenterteilung: **19.10.2005**
(21) Anmeldenummer: 99915689.6
(22) Anmeldetag: 23.03.1999
(51) Int. Cl.: C09C 1/00, C09D 17/00

(54) **PIGMENTPRÄPARATION**
PIGMENT PREPARATION
PREPARATION PIGMENTAIRE

(30) Priorität: 26.03.1998 DE 19813394
(43) Veröffentlichungstag der Anmeldung: 10.01.2001
(73) Patentinhaber: Merck Patent GmbH, 64293 Darmstadt (DE)
(72) Erfinder: GRIESSMANN, Carsten, D-64846 Gro -Zimmern (DE); HECHLER, Wolfgang, D-64686 Lautertal (DE); HERGET, Gerhard, D-64372 Ober-Ramstadt (DE)
(86) Internationale Anmeldenummer: PCT/EP1999/001940
(87) Internationale Veröffentlichungsnummer: WO 1999/048988

(56) Entgegenhaltungen:
- EP-A- 0 285 977
- EP-A- 0 803 552
- DE-A- 19 708 167
- GB-A- 1 357 319
- US-A- 5 656 375

## Beschreibung

Die Erfindung betrifft eine nichtstaubende, homogene Pigmentpräparation, die sich dadurch auszeichnet, daß sie mindestens 40 Gew.% eines oder mehrerer Effektpigmente, und 0,5-60 Gew.% eines Aldehyd- oder Ketonharzes bezogen auf das Pigment enthält.

In technischen Prozessen werden Pigmente oft nicht als trockene Pulver eingesetzt, da diese stauben, was zu erhöhten Anforderungen in Hinblick auf die Arbeitsplatzsicherheit führt. Weiterhin wird bei der Einbringung von Pulvern in Kunststoffe, Druckfarben, Industrielacke, Basislacksysteme, etc., vielfach eine Agglomeration des Pigmentpulvers beobachtet. Eine homogene Verteilung des Pigments in der jeweiligen Matrix ist häufig nur schwer oder aber gar nicht zu erreichen.

Anstelle des Pigmentpulvers werden nicht staubende Pigmentzubereitungen verwendet. Hierbei handelt es sich um
- rieselfähige Pulver, wobei Perlglanzpigmente mit Polymeren beschichtete werden, wie sie z.B. in der DE-PS-2603211 beschrieben sind,
- pigmentierte rieselfähige Pulver mit einem geringen Feuchtegehalt, wie sie z.B. aus der DE-OS-4139993 bekannt sind,
- pigmentierte Pulver mit einem höheren Feuchtegehalt, wobei letztere häufig auch aufgrund ihrer fließfähigen Konsistenz als Pasten bezeichnet werden, oder um
- Trockenpräparationen als Vorprodukte für Druckfarben, wie sie z.B. aus der EP 0 803 552 bekannt sind.

Pasten und daraus hergestellte Trockenpräparate sind eine technische Alternative zu den trockenen oder angefeuchteten Pulvern, wenn sie folgende Rahmenbedingungen erfüllen:
- fließfähige Konsistenz
- möglichst geringe Dilatanz
- möglichst hoher Pigmentgehalt

Die Komponenten der Präparation/Paste sollten dabei so gewählt sein, daß die Zubereitung möglichst gut auf die anderen Komponenten des jeweiligen Beschichtungssystems abgestimmt ist und sich nach der Einbringung leicht homogen verteilt.

Neben einer guten Kompatibilität mit den weiteren Bestandteilen des Beschichtungssystems müssen Pigmentpräparationen eine hohe Stabilität aufweisen, d.h., sie dürfen nicht zur Phasenseparation neigen. Diese Forderung ist besonders wichtig bei Pigmentpräparationen auf der Basis plättchenförmiger Pigmente, da diese auf Grund ihrer Struktur bei der Phasenseparation zum "Zusammenbacken" neigen und nur schwer wieder aufgerührt werden können. Pigmente auf der Basis plättchenförmiger Substrate sind insofern problematisch in der Handhabung, als die Pigmente infolge ihrer Größe und ihrer Dichte sich leicht absetzen und dann zu einem sehr festen Sedimentkuchen zusammenbacken können. Dieser Kuchen ist in der Regel nur schwer wiederaufrührbar. Dies gilt vor allem bei der Lagerung von Lacken, Farben und Druckfarben, sowie bei der Verarbeitung derselben.

So wurden unter anderem zahlreiche Methoden entwickelt um das Problem der Einarbeitung und Handhabung von plättchenförmigen Pigmenten in Beschichtungsmassen zu lösen. Das Wiederaufrühren kann erleichtert werden, indem den Beschichtungsmassen Additive zugesetzt werden, die entweder eine gezielte Flokkulation (Kartenhauseffekt), ein strukturviskoses und/oder thixotropes Verhalten, eine sterische Abstoßung und/oder eine elektrostatische Abstoßung bzw. elektrosterische Stabilisierung der Pigmente bewirken. Diese Zusätze können jedoch einen negativen Einfluß auf die Qualität der Beschichtung haben. Insbesondere die Brillanz bei Effektpigmenten und die Gleichmäßigkeit der Beschichtung können beeinträchtigt werden.

Weiterhin ist eine homogene, stabile Verteilung der Redispergiermittel im Perlglanzpigment-Pulver nur schwer zu erreichen, bzw. das Redispergiermittel verliert beim Mischen an Aktivität.

Die bisher zur Verwendung in Beschichtungssystemen entwickelten Zubereitungen mit Effektpigmenten mit einem Pigmentanteil > 30 Gew.% genügen den beschriebenen Anforderungen häufig nur unzureichend, insbesondere deshalb, da sie zur Agglomeration und Scherverdickung neigen.

Die Aufgabe der vorliegenden Erfindung bestand daher in der Bereitstellung von Pigmentpräparationen, insbesondere in Form von Pasten und Trockenpräparaten, die sehr gut in lösemittelhaltigen Beschichtungssystemen verwendet werden können, eine hohe Stabilität aufweisen, sich leicht redispergieren lassen und sich gleichzeitig durch eine hohe Kompatibilität mit den übrigen Komponenten des Beschichtungssystems auszeichnen. Weiterhin soll die erfindungsgemäße Pigmentpräparation auch zur Herstellung von Trockenpräparaten, z.B. in Form von Pellets, Granulaten, etc., gut geeignet sein.

Überraschenderweise wurde gefunden, daß diese Aufgabe durch die Bereitstellung der erfindungsgemäßen Pigmentpräparation gelöst werden kann.

Gegenstand der Erfindung ist somit eine nichtstaubende, homogene Pigmentpräparation gemäß dem unabhängigen Anspruch 1.

Bevorzugte Ausführungsformen des Erfindung sind Gegenstand der Ansprüche 2-7 und 11. Ansprüche 8 und 10 betreffen spezielle Verwendungen der Pigmentpräparation, Anspruch 9 mittels spezieller Formgebung hergestellte Trockenpräparation.

Die erfindungsgemäße Präparation ist in Abhängigkeit vom Feuchtegehalt eine fließfähige Paste bzw. ein angefeuchtetes, rieselfähiges Pulver. Beide sind sehr gut zur Herstellung von Trockenpräparaten, z.B. Granulaten, Pellets, Briketts, geeignet. Die aus der erfindungsgemäßen Pigmentzubereitung hergestellten Trockenpräparate sind ebenfalls Gegenstand der Erfindung.

Als Effektpigmente werden Pigmente auf der Basis plättchenförmiger, transparenter oder semitransparenter Substrate aus z.B. Schichtsilikaten, wie etwa Glimmer, synthetischen Glimmer, SiO₂-Flakes, TiO₂-Flakes, Al₂O₃-Flakes, holographischen Pigmenten, Talkum, Sericit, Kaolin, aus Glas oder anderen silikatischen Materialien verwendet, die mit farbigen oder farblosen Metalloxiden wie z. B. TiO₂, Titansuboxide, Titanoxinitride, Fe₂O₃, Fe₃O₄, SnO₂, Cr₂O₃, ZnO, CuO, NiO und anderen Metalloxiden allein oder in Mischung in einer einheitlichen Schicht oder in aufeinanderfolgenden Schichten (Multilayerpigmente) beschichtet sind. Perlglanzpigmente sind z.B. aus den deutschen Patenten und Patentanmeldungen 14 67 468, 19 59 998, 20 09 566, 22 14 454, 22 15 191, 22 44 298, 23 13 331, 25 22 572, 31 37 808, 31 37 809, 31 51 343, 31 51 354, 31 51 355, 32 11 602, 32 35 017 und P 38 42 330 bekannt und im Handel erhältlich, z.B. unter der Marke Iriodin® der Fa. Merck KGaA, Darmstadt, BRD. Besonders bevorzugte Pigmentpräparationen enthalten TiO₂/Glimmer-, Fe₂O₃/Glimmer- und/oder TiO₂/Fe₂O₃-Glimmerpigmente. Die Beschichtung der SiO₂-Flakes kann z. B. erfolgen wie in der WO 93/08237 (naßchemische Beschichtung) oder DE-OS 196 14 637 (CVD-Verfahren) beschrieben.

Die erfindungsgemäßen Pigmentpräparationen können ein oder mehrere Effektpigmente enthalten. Vielfach können durch die Verwendung von mindestens zwei verschiedenen Effektpigmenten besondere Farb- und Glanzeffekte erzielt werden. Bevorzugte Pigmentpräparationen enthalten ein oder mehrere Effektpigmente auf Basis von Glimmer und/oder SiO₂-Flakes.

Die erfindungsgemäße Pigmentpräparation enthält vorzugsweise 40 - 60 Gew.% an Effektpigmenten, insbesondere 45 - 60 Gew.%. Ganz besonders bevorzugt sind Pigmentpräparationen mit einem Gehalt an Effektpigmenten von mehr als 50 Gew.%. Die Gew.-%-Angaben beziehen sich immer auf die feuchte, d.h. nicht getrocknete Pigmentpräparation. Im getrockneten Zustand kann man Pigmentpräparate mit einem Pigmentanteil bis 98 % erhalten.

Als zwingende Komponente enthält die erfindungsgemäße Pigmentpräparation ein Keton- und/oder Aldehydharz in Mengen von 0,5 bis 60 Gew.%, vorzugsweise 5 bis 40 Gew.%, insbesondere 10 bis 30 Gew.%. Alle dem Fachmann bekannten Keton- oder Aldehydharze können verwendet werden, insbesondere Keton- und Aldehydharze, die unter der Marke Laropal K80 und Laropal A81 oder A101 von der BASF vertrieben werden, bzw. Kunstharz AP, SK der Fa. Hüls.

Geeignete Ketonharze sind erhältlich durch alkalisch katalysierte Selbstkondensation von Ketonen, z.B. Cyclohexanon, Methylcyclohexanon oder Mischkondensation von Ketonen, wie z.B. Aceton, Butanon, Acetophenon, Cyclohexanon, Methylcyclohexanon, mit Formaldehyd. Die resultierenden Ketonharze sind unverseifbare und neutral reagierende Harze von heller Farbe und besitzen in der Regel einen Erweichungsbereich von 80-130 °C. Geeignete Aldehydharze sind Polykondensationsprodukte, erhältlich durch Behandlung von Aldehyden, insbesondere Acetaldehyd, mit starken Alkalien.

Vorzugsweise werden erfindungsgemäß solche Harze eingesetzt, die einen niedrigen Erweichungs- bzw. Schmelzpunkt besitzen, da dann die Herstellung der Präparationen durch ein Schmelzverfahren erfolgen kann. Andererseits darf die Erweichungstemperatur aber auch nicht unter Raumtemperatur liegen, da dann mit Verblocken und mangelnder Rieselfähigkeit des Trockenpräparates, z. B. in Form eines Granulats, zu rechnen ist.

Vorteilhaft ist weiterhin, wenn die erfindungsgemäße Pigmentpräparation 0 bis 10 Gew.-%, vorzugsweise 0,05 bis 5 Gew.-%, insbesondere 0,01 bis 3 Gew.-% eines Modifizierungsmittels enthält. Insbesondere wird ein Modifiziermittel eingesetzt um die Redispergierung zu verbessern. Bevorzugte Modifizierungsmittel sind sphärische Teilchen, Acrylatharze, Maleinatharze, Urethanharze, Nitrocellulose und alle bekannten Cellulosederivate, Polyester, PVC, Polyethylenglykol, Polyethylenglykolester und -ether, Emutgatoren, Tenside, Polyacrylat oder Polymethacrylat oder faserförmige Partikel mit einer Faserlänge von 0, 1-20 µm, in Mengen von 0,1 bis 10 Gew.%, vorzugsweise 0,05 bis 5 Gew.%, insbesondere 0,01 bis 3 Gew.%, bezogen auf das Pigment.

Durch Zusatz eines Redispergierhilfsmittels in Form von sperrigen Teilchen, wie z.B. Fasern oder sphärischen Partikein, wird verhindert, daß die nach dem erfindungsgemäßen Verfahren behandelten Effektpigmente sich auf Grund der sterischen Abstoßung in nennenswertem Umfang aufeinanderlegen und damit eine starke Adhäsion ausüben. Dies bewirkt, daß
1. die erfindungsgemäßen Präparationen stabiler sind, und
2. durch den Eintrag der Redispergierhilfe über die Pigmentpräparation in das Lack- oder Farbsystem die Effektpigmente sich in Lack- und Farbsystemen zum Teil sehr viel langsamer absetzen,
das Sediment aber in allen Fällen weniger hart ist, und daß keine Probleme beim Wiederaufrühren des Bodensatzes auftreten.

Alle dem Fachmann bekannten organischen und anorganischen Fasern mit einer Faserlänge von 0,1-20 µm können verwendet werden. Geeignete Partikel sind insbesondere alle Kunstfasern z.B. aus Polyethylen, Polyacrylaten, Polypropylen, Polyamiden, Cellulosefasern, anorganische Fasern, hier bevorzugt Siliziumverbindungen, Glasfasern sowie insbesondere die Kondensationsprodukte aus modifizierten Isocyanaten und Mono- und Diaminen.

Diese Kondensationsprodukte, wobei es sich um Diharnstoffderivate sowie Aminoharnstoffe mit Urethangruppierungen handelt, sind als Thixotropierungsmittel bekannt und werden mit einem Bindemittel Farben und Lacken zugesetzt, um die Ablaufeigenschaften und die Streichbarkeit zu verbessern.

Als Redispergierhilfsmittel können alle dem Fachmann bekannten Diharnstoffderivate und Urethanverbindungen verwendet werden, wie sie z.B. in der EP 0 198 519, der DE 18 05 693.4 und in Organic Coatings: Science and Technology, A. Heenriga, P.J.G. von Hemsbergen, S. 201-222, New York 1983 beschrieben werden.

Geeignete sphärische Materialien sind insbesondere Glas-, Wachs- oder Polymerhohlkugeln aus Vinylharzen, Nylon, Silicon, Epoxyharzen, Olefinharzen, Polystyrolen sowie anorganische Materialien, wie z. B. TiO₂, SiO₂ oder ZrO₂. Vorzugsweise werden Hohlkugeln, ferner auch Vollkugeln, mit einer Teilchengröße von 0,05 bis 150 µm verwendet. Insbesondere bevorzugt werden in der erfindungsgemäßen Pigmentpräparation Glas-, Wachs- oder Polymerhohlkugeln eingesetzt.

Sphärische Teilchen auf Basis von SiO₂ in einem Teilchenbereich von 3-10 µm sind z.B. als Materialien für die Hochdruckflüssigkeitschromatographie bekannt und werden z.B. als LiChrospher® von der Fa. Merck KGaA, Darmstadt, BRD, vertrieben. Vorzugsweise werden solche Materialien in monodisperser Form, d.h. mit einer möglichst einheitlichen Teilchengröße, eingesetzt. Bekannt sind solche monodispersen sphärischen Teilchen auf Basis von SiO₂, TiO₂ und ZrO₂. Monodisperses SiO₂ kann beispielsweise nach der DE 36 16 133 hergestellt werden. Glashohlkugeln werden beispielsweise unter dem Handelsnamen Q-CEL von der Fa. PQ Corporation, USA oder Scotchlite von der Fa. 3M, Frankfurt, BRD vertrieben.

Zusätzlich kann die erfindungsgemäße Pigmentpräparation oberflächenaktive Substanzen enthalten, wie z.B. Alkylsilane, die auch eine weitere funktionelle Gruppe enthalten können, ungesättigte oder gesättigte Fettsäuren oder Fluortenside. Insbesondere bevorzugt werden Silanverbindungen der Formel (CₙH₂ₙ₊₁)Si(OCₘH₂ₘ₊₁)₃, worin n 1-30 und m 1-10 bedeutet, als oberflächenaktive Substanzen eingesetzt. Geeignete Silanverbindungen sind beispielsweise n-Hexyldecyl-triethoxy-silan und n-Octyldecyl-triethoxysüan (Si 116 bzw. Si 118 der Degussa AG, Frankfurt, BRD) sowie die entsprechenden Fluoralkylsilane.

Ferner können als oberflächenaktive Substanzen die gesättigten und ungesättigten Fettsäuren, wie z.B. Capronsäure, Caprylsäure, Caprinsäure, Laurinsäure, Myristinsäure, Palmitinsäure, Stearinsäure, Ölsäure, Linolsäure sowie Fettsäuregemische eingesetzt werden.

Vorzugsweise enthält die Pigmentpräparation neben dem Silan noch zusätzlich ein Tensid oder eine Fettsäure. Bei dem oberflächenaktiven Reagenz kann es sich auch um ein Gemisch aus Silan, Fettsäuren und/oder Tensiden handeln. Die Pigmentpräparationen können 0,1 bis 5 Gew.%, vorzugsweise 0,2 bis 3 Gew.% und insbesondere 0,5 bis 2 Gew.% an oberflächenaktiven Substanzen bezogen auf das Pigment enthalten.

Die erfindungsgemäße Pigmentpräparation kann zusätzlich 0 bis 40 Gew.% eines organischen Lösemittels bzw. Lösemittelgemisches, vorzugsweise 5 bis 35 Gew.%, insbesondere 10 bis 30 Gew.%, enthalten.

Die Lösemittelkomponente in der erfindungsgemäßen Pigmentpräparation muß auf das Ketonharz und Aldehydharz sachgemäß abgestimmt werden. Bei der Herstellung können alle organischen Lösemittel sowie Wasser bzw. mit Wasser mischbare organische Lösungsmittel eingesetzt werden. Geeignete Lösemittel sind z. B. aromatische Lösungsmittel, z.B. Toluole, Benzine, Mineralöle, Kohlenwasserstoffe, Ester, langkettige Amine, pflanzliche Öle, einwertige aliphatische Alkohole, wie solche mit 2 bis 4 Kohlenstoffatomen, z.B. Ethanol, Butanol oder Isopropanol oder Ketone, z.B. Aceton oder Methylethylketon oder Glykolether, wie z.B. Propylenglycolmonoethylether, Propylenglycolmonoethylether oder Diole, wie z.B. Ethylenglykol und Propylenglykol oder Polyetherdiole, aliphatische Triole und Tetrole mit 2 bis 6 Kohlenstoffatomen, wie Trimethylolethan, Trimethylolpropan, Glycerin, 1,2,4-Butantriol, 1,2,6-Hexantriol und Pentaerythrit, sowie alle anderen Lösemittel anderer Verbindungsklassen bzw. der Gemische der vorgenannten Lösemittel. Vorzugsweise werden solche Lösemittel eingesetzt, die in Karsten, Lackrohstofftabellen, 9. Auflage 1992, aufgelistet sind.

Die Herstellung der erfindungsgemäßen Pigmentpräparation erfolgt einfach dadurch, daß zu dem Effektpigment bzw. Effektpigmentgemisch, das Ketonharz und/oder Aldehydharz, gegebenenfalls ein organisches Lösemittel oder Lösemittelgemisch, das Redispergierhilfsmittel und gegebenenfalls weitere Additive, gleichzeitig oder nacheinander hinzugegeben werden, und daß diese Mischung in einem Mischgerät, insbesondere einem Dispermaten, schonend homogenisiert wird.

Vorzugsweise wird das Pigment vorgelegt und zunächst unter Rühren mit dem Lösemittel enthaltend das Ketonharz und/oder Aldehydharz und gegebenenfalls bereits das Redispergiermittel, angeteigt; anschließend erfolgt gegebenenfalls die Zugabe einer weiteren Lösung bestehend aus Lösemittel, Additiven und der Redispergierhilfe. Gegebenenfalls kann an dieser Stelle bereits eine erste Trocknungsstufe eingeschaltet sein, wobei die Trocknungstemperatur zwischen 80° und 150° liegen kann.

Der erfindungsgemäßen Pigmentpräparation können während oder nach der Herstellung weitere übliche Additive zugesetzt werden, wie z.B. pH-Regler, Entschäumer, Netzmittel, Antiabsetzmittel, Verlaufsmittel, Sikkative oder Thixotropiermittel. Es handelt sich hierbei um in der Lackindustrie übliche Hilfsstoffe, die in der erfindungsgemäßen Pigmentpräparation in einer Menge von 0 bis 10 Gew.% enthalten sein können.

Insbesondere können auch solche Stoffe zugesetzt sein, die das Zerfallen und Lösen der Pigmentgranulate beschleunigen bzw. unterstützen, z.B. sperrige sphärische Padikel, wie Hohlkugeln, Halbkugeln.

Bei der erhaltenen erfindungsgemäßen Pigmentpräparation handelt es sich um ein homogenes Pulver bzw. um gut fließfähige Pasten mit einem relativ hohem Gehalt an Effektpigmenten. Aufgrund der besonders hohen Kompatibilität des Keton/Aldehydharzes ist die erfindungsgemäße Pigmentpräparation ebenfalls gut kompatibel mit handelsüblichen Systemen. Weiterhin zeichnet sich die Präparation durch ihre Staubfreiheit, die gute Dispergierbarkeit und Redispergierbarkeit, eine hohe Lagerstabilität und eine gute Verarbeitbarkeit aus und ist somit herkömmlichen Pigmentpräparationen deutlich überlegen.

Die fließfähige Pigmentpräparation ist sehr gut geeignet für die Befüllung von Tuben sowie zum Strangpressen. Zur Herstellung von Trockenpräparaten wird die erfindungsgemäße Pigmentpräparation stranggepreßt oder auf anderen dem Fachmann bekannten Wegen in eine kompakte Teilchenform verdichtet, z. B. durch Tablettieren, Brikettieren, Pelletieren, Wirbelschichtgranulieren, Granulieren, Sprühgranulieren oder Extrudieren, und gegebenenfalls anschließend getrocknet. Der Trocknungsprozeß findet in der Regel bei Temperaturen von 20 °C bis 150°C statt und kann ggf. unter reduziertem Druck erfolgen. Zuletzt wird das Trockenpräparat gegebenenfalls klassiert oder zerkleinert. Die so erhaltenen Granulate beispielsweise sind ebenfalls nichtstaubend und besitzen Teilchengrößen im Bereich von 0,1-150 mm, vorzugsweise 0,1-20 mm, insbesondere 0,1-2 mm. Die Lagerung und der Transport der Trockenpräparate sind weniger eingeschränkt und daher sehr unproblematisch. Die Trockenpräparate besitzen den weiteren Vorteil, daß sie mit wenig oder keiner Flüssigkeit beladen sind und damit eine erhöhte Stabilität besitzen.

Diese Trockenpräparate können in alle dem Fachmann bekannten Bindemittein für Lacke, Farben und Druckfarben eingearbeitet werden, insbesondere handelt es sich um Lösemittelsysteme.

Aufgrund der guten Verträglichkeit der Ketonharze und Aldehydharze kommen Bindemittelharze in Frage, wie sie üblicherweise den Farben und Lacken zugesetzt werden, und z.B. in Karsten, Lackrohstofftabellen, 9. Auflage 1992, aufgeführt werden. Als Bindemittel kommen alle üblicherweise für Druckfarben in Frage kommenden Bindemittel bzw. Bindemittelgemische in Betracht, z.B. auf der Basis von Cellulose, Polyacrylat-, Polymethacrylat, Alkyd-, Polyester-, Polyphenol-, Harnstoff-, Melamin-, Polyterpen-, Polyvinyl-, Polyvinylchlorid-, Polyvinylpyrrolidon-Harzen, Polystyrolen, Polyolefinen, Cumaron-Inden, Kohlenwasserstoff-, Keton-, Aldehyd-, Aromaten-Formaldehyd-Harzen, Carbamidsäure-, Sulfonamid-, Epoxid-Harzen, Polyurethanen und/oder natürlichen Ölen oder Derivaten der genannten Substanzen eingesetzt werden. Eine besonders gute Redispergierbarkeit der erfindungsgemäßen Effektpigment-Präparation hat sich gezeigt, wenn als Bindemittel Cellulose bzw. Celluloseverbindungen eingesetzt werden.

Durch die Integration einer Redispergierhilfe ist gewährleistet, daß die erfindungsgemäßen Pigmentpräparationen auch in den fertigen Lack- und Farbsystemen leicht aufrührbar sind und keiner weiteren Verbesserung durch den Endformulierer mehr bedürfen.

Die verbesserte Deagglomeration der Trockenpräparate eingearbeitet in ein Bindemittel, z.B. in eine Druckfarbe, zeigt sich bereits mit geringen Mengen an sphärischen Teilchen in der Pigmentpräparation. So werden bereits bei der Verwendung von Granulaten mit einem Gehalt von 0,5 Gew.% an sphärischen Teilchen bezogen auf das Trockenpigment die Auflösegeschwindigkeit deutlich erhöht und die Stabilität der Druckfarbe schneller erzielt (Viskosität/Farbton).

Die erfindungsgemäße Präparation als Paste oder als Trockenpräparat kann für vielfältige Anwendungen verwendet werden. Bevorzugt wird sie in Beschichtungssystemen aus den Bereichen Druck, insbesondere Offset- und Tiefdruck, Flexodruck, Lackierung und Siebdruck, Lack und Farbe eingesetzt. Besonders bevorzugt wird die Präparation als Vorprodukt für Beschichtungsmassen auf beliebige Substratmaterialien, beispielsweise Metalle wie Eisen, Stahl, Aluminium, Kupfer, Bronze, Messing sowie Metallfolien aber auch metallüberzogene Oberflächen von Glas, Keramik und Beton, als auch auf Holz, z.B. Möbel, Ton, Textil, Papier, Verpakkungsmaterialien, z.B. Kunststoffbehälter, Folien oder Pappen, oder auf anderen Materialien zu dekorativen und/oder schützenden Zwecken aufgebracht.

Gegenstand der Erfindung ist somit auch die Verwendung der Pigmentpräparation in Formulierungen wie Farben, Lacken, Druckfarben und Kunststoffen.

Die nachfolgenden Beispiele sollen die Erfindung näher erläutern, ohne sie jedoch zu beschränken.

### Beispiele

### Beispiel 1

### Pigmentgranulat für Lösungsmittel-haltige Tief- und Flexodruckfarben

Zu 1000 g Iriodin® 123 (TiO₂-Glimmerpigment der Teilchengröße 5 bis 25 µm der Fa. Merck KGaA, BRD) in einem Mischgranulierer RO2 der Fa. Eirich wird eine Lösung gegeben bestehend aus 250 g Laropal A81 (Aldehydharz der BASF, BRD) und 188 g Ethanol und anschließend wird intensiv gemischt. Zur Erzielung einer groben Korngröße werden weitere 200 g Ethanol der Pigmentpaste zugesetzt. Das erhaltene Granulat mit Teilchengrößen von 1-10 mm wird zuletzt im Vakuumtrockner bei 80 °C getrocknet.

### Beispiel 2

### Pigmentgranulat für Lösungsmittel-haltige Tief- und Flexodruckfarben

Analog Beispiel 1 wird aus 1000 g Iriodin® 123, 176,5 g Laropal A81 und 300 g Ethanol ein Granulat mit einer Korngröße von 0,1-3 mm hergestellt.

### Beispiel 3

In einem Mischgranulierer Evactherm der Fa. Eirich, ausgestattet mit Heizmantel, werden 30 kg Iriodin® 123 und 7,5 kg Laropal A81 (BASF) bei einer Temperatur von 120 °C zunächst homogen gemischt und, nachdem eine gleichmäßige Verteilung erreicht wird, mit einer geeigneten Einstellung granuliert. Das Versuchsgut wird abgekühlt und ausgetragen. Die Granulatteilchen sind zwischen 0,1 und 2 mm groß und lassen sich vergleichbar schnell zu Beispiel 2 im lösemittelhaltigen Prüfbindemittel dispergieren.

### Beispiel 4

Analog Beispiel 3, aber es werden zusätzlich noch 300 g Glashohlkugeln (Fa. 3M) zugesetzt. Die erhaltenen Granulatteilchen lassen sich sehr schnell dispergieren.

### Beispiel 5

In einem Mischgranulierer Evactherm der Fa. Eirich, ausgestattet mit Heizmantel, werden 300 kg Iriodin® 123 zunächst mit 1,8 kg einer essigsauren Lösung (pH=3), und anschließend mit einer Lösung von 600 g n-Octyl-trimethoxysilan (Fa. Degussa) in 1800 g Ethanol versetzt und unter Vakuum gemischt und trockengelegt. Anschließend versetzt man mit 7,5 kg Laropal A81 und granuliert wie in Beispiel 3 beschrieben. Die Granulatteilchen sind zwischen 0,1 und 3 mm groß und lassen sich sehr schnell im lösemittelhaltigem Bindemittel dispergieren.

### Beispiel 6

In einem Mischgranulierer Evactherm der Fa. Eirich, ausgestattet mit Heizmantel, werden 300 kg Iriodin® 123 und 7,5 kg Kunstharze AP (Ketonharz der Fa. Hüls) bei einer Temperatur von 120 °C zunächst homogen gemischt und nachdem eine gleichmäßige Verteilung erreicht worden ist, wird mit einer geeigneten Einstellung granuliert. Das Versuchsgut wird abgekühlt und ausgetragen. Die Granulatteilchen sind zwischen 0,1 und 2 mm groß und lassen sich vergleichbar schnell zu Beispiel 2 im lösemittelhaltigen Prüfbindemittel dispergieren.

### Beispiel 7

Analog Beispiel 6, aber es werden zusätzlich noch 500 g Setal SS50 (Fasern aus Diharstoffderivaten; Fa. Akzo) zugesetzt. Die erhaltenen Granulatteüchen lassen sich sehr schnell dispergieren und nach einem Standtest von 2 Wochen ist das sedimentierte Perlglanzpigment besonders leicht aufrührbar.

## Patentansprüche

1. Nichtstaubende homogene Pigmentpräparation in Form von Pasten und Trockenpräparaten, **dadurch gekennzeichnet, daß** sie
- ≥ 40 Gew.% ein oder mehrerer Effektpigmente,
- 0,5 - 60 Gew.% eines Ketonharzes mit einem Erweichungspunkt von 80-130 °C und/oder eines Aldehydharzes,
- 0,1 - 10 Gew.% eines Modifiziermittels ausgewählt aus der Gruppe sphärische Teilchen, Acrylatharze, Maleinatharze, Urethanharze, Nitrocellulose, Cellulosederivate, Polyester, PVC, Polyethylenglykol, Polyethylenglykolester und -ether, Emulgatoren, Tenside, Polyacrylat oder Polymethacrylat, faserförmige Partikel mit einer Faserlänge von 0,1 -20 µm, und
- 0-40 Gew.% Wasser und/oder eines organischen Lösemittels oder Lösemittelgemisches
enthält.

2. Nichtstaubende homogene Pigmentpräparation nach Anspruch 1, **dadurch gekennzeichnet, daß** das Effektpigment ein Perlglanzpigment und/oder ein mit ein oder mehreren Metalloxiden beschichtetes SiO₂-Plättchen ist.

3. Nichtstaubende homogene Pigmentpräparation nach Anspruch 1 oder 2, **dadurch gekennzeichnet, daß** das Perlglanzpigment ein TiO₂/Glimmer- oder Fe₂O₃-Glimmerpigment ist.

4. Nichtstaubende homogene Pigmentpräparation nach Anspruch 1 oder 2, **dadurch gekennzeichnet, daß** das SiO₂-Plättchen mit TiO₂ und/oder Fe₂O₃ beschichtet ist.

5. Nichtstaubende homogene Pigmentpräparation nach einem der Ansprüche 1 bis 4, **dadurch gekennzeichnet, daß** das Ketonharz ein Cyclohexanonharz ist.

6. Nichtstaubende homogene Pigmentpräparation nach einem der Ansprüche 1 bis 5, **dadurch gekennzeichnet, daß** das Redispergierhilfsmittel ein Polyacrylat oder Polymethacrylat, faserförmige Partikel oder sphärische Teilchen sind.

7. Nichtstaubende homogene Pigmentpräparation nach einem der Ansprüche 1 bis 6, **dadurch gekennzeichnet, daß** sie als zusätzliche Komponenten Entschäumer, oberflächenaktive Substanzen, Netzmittel, Antiabsetzmittel, Verlaufsmittel, Sikkative und/oder Thixotropiermittel enthalten kann.

8. Verwendung der Pigmentpräparation nach Anspruch 1 zur Herstellung von Trockenpräparaten, wie Granulate, Briketts und Pellets.

9. Trockenpräparation hergestellt aus der nichtstaubenden homogenen Pigmentpräparation nach Anspruch 1, indem die Formgebung der Trockenpräparation durch Tablettieren, Brikettieren, Pelletieren, Wirbelschichtgranulieren, Granulieren, Sprühgranulieren oder Extrudieren erfolgt, und die Präparation gegebenenfalls vom Lösungsmittel befreit wird.

10. Verwendung der Pigmentpräparation nach Anspruch 1 in Formulierungen wie Farben, Lacken, Druckfarben, insbesondere Offset-, Flexo- und Tiefdruckfarben, und Kunststoffen, **dadurch gekennzeichnet, daß** die Pigmentpräparation in eine kompakte Teilchenform gebracht wird, und gegebenenfalls vom Lösungsmittel befreit wird.

11. Nichtstaubende homogene Pigmentpräparation nach Anspruch 1 in Form eines lösungsmittelfreien, rieselfähigen Granulats.

## Claims

1. Non-dusting homogeneous pigment preparation in the form of pastes and dry preparations, **characterised in that** it comprises
- ≥40% by weight of one or more effect pigments,
- 0.5 - 60% by weight of a ketone resin having a softening point of 80 - 130°C and/or an aldehyde resin,
- 0.1 - 10% by weight of a modifier selected from the group of spherical particles, acrylate resins, maleate resins, urethane resins, nitrocellulose, cellulose derivatives, polyester, PVC, polyethylene glycol, polyethylene glycol esters and ethers, emulsifiers, surfactants, polyacrylate or polymethacrylate, fibrous particles having a fibre length of 0.1 - 20 µm, and
- 0 - 40% by weight of water and/or an organic solvent or solvent mixture.

2. Non-dusting homogeneous pigment preparation according to Claim 1, **characterised in that** the effect pigment is a pearlescent pigment and/or an SiO₂ flake coated with one or more metal oxides.

3. Non-dusting homogeneous pigment preparation according to Claim 1 or 2, **characterised in that** the pearlescent pigment is a TiO₂/mica or Fe₂O₃/mica pigment.

4. Non-dusting homogeneous pigment preparation according to Claim 1 or 2, **characterised in that** the SiO₂ flake is coated with TiO₂ and/or Fe₂O₃.

5. Non-dusting homogeneous pigment preparation according to one of Claims 1 to 4, **characterised in that** the ketone resin is a cyclohexanone resin.

6. Non-dusting homogeneous pigment preparation according to one of Claims 1 to 5, **characterised in that** the redispersion assistant is a polyacrylate or polymethacrylate, fibrous particles or spherical particles.

7. Non-dusting homogeneous pigment preparation according to one of Claims 1 to 6, **characterised in that** it may comprise, as additional components, antifoams, surface-active substances, wetting agents, antisettling agents, flow-control agents, siccatives and/or thixotropic agents.

8. Use of the pigment preparation according to Claim 1 for the preparation of dry preparations, such as granules, briquettes and pellets.

9. Dry preparation prepared from the non-dusting homogeneous pigment preparation according to Claim 1 by carrying out the shaping of the dry preparation by tabletting, briquetting, pelleting, fluidised-bed granulation, granulation, spray granulation or extrusion, and, if necessary, freeing the preparation from solvent.

10. Use of the pigment preparation according to Claim 1 in formulations, such as paints, coatings, printing inks, in particular offset, flexographic and gravure printing inks, and plastics, **characterised in that** the pigment preparation is brought into a compact particle shape, and, if necessary, is freed from solvent.

11. Non-dusting homogeneous pigment preparation according to Claim 1 in the form of solvent-free, free-flowing granules.

## Revendications

1. Préparation de pigments homogène sans formation pulvérulente sous la forme de pâtes et de préparations sèches, **caractérisée en ce qu'**elle comprend
- ≥40% en poids d'un ou de plusieurs pigments d'effet,
- 0,5 - 60% en poids d'une résine cétone présentant un point de ramollissement de 80 - 130°C et/ou d'une résine aldéhyde,
- 0,1 - 10% en poids d'un modificateur choisi parmi le groupe comprenant des particules sphériques, des résines acrylate, des résines maléate, des résines uréthane, de la nitrocellulose, des dérivés de cellulose, du polyester, du PVC, du polyéthylène glycol, des esters et des éthers de polyéthylène glycol, des émulsifiants, des agents tensio-actifs, du polyacrylate ou du polyméthacrylate, des particules fibreuses présentant une longueur de fibre de 0,1 - 20 µm, et
- 0 - 40% en poids d'eau et/ou d'un solvant organique ou d'un mélange de solvants.

2. Préparation de pigments homogène sans formation pulvérulente selon la revendication 1, **caractérisée en ce que** le pigment d'effet est un pigment perlé et/ou un flocon de SiO₂ revêtu d'un ou de plusieurs oxydes métalliques.

3. Préparation de pigments homogène sans formation pulvérulente selon la revendication 1 ou 2, **caractérisée en ce que** le pigment perlé est un pigment de TiO₂/mica ou de Fe₂O₃/mica.

4. Préparation de pigments homogène sans formation pulvérulente selon la revendication 1 ou 2, **caractérisée en ce que** le flocon de SiO₂ est revêtu de TiO₂ et/ou de Fe₂O₃.

5. Préparation de pigments homogène sans formation pulvérulente selon l'une des revendications 1 à 4, **caractérisée en ce que** la résine cétone est une résine cyclohexanone.

6. Préparation de pigments homogène sans formation pulvérulente selon l'une des revendications 1 à 5, **caractérisée en ce que** l'assistant de redispersion est un polyacrylate ou un polyméthacrylate, des particules fibreuses ou des particules sphériques.

7. Préparation de pigments homogène sans formation pulvérulente selon l'une des revendications 1 à 6, **caractérisée en ce qu'**elle peut comprendre, en tant que composants additionnels, des anti-mousses, des substances actives en surface, des agents mouillants, des agents de suspension, des agents de contrôle de flux, des siccatifs et/ou des agents thixotropiques.

8. Utilisation de la préparation de pigments selon la revendication 1 pour la préparation de préparations sèches, telles que des granules, des briquettes et des pastilles.

9. Préparation sèche préparée à partir de la préparation de pigments homogène sans formation pulvérulente selon la revendication 1 en mettant en oeuvre la conformation de la préparation sèche par formation de comprimés, par formation de briquettes, par formation de pastilles, par granulation en lit fluidisé, par granulation, par granulation par spray ou par extrusion, et, si nécessaire, en libérant la préparation à partir d'un solvant.

10. Utilisation de la préparation de pigments selon la revendication 1 dans des formulations telles que des peintures, des revêtements, des encres d'impression, en particulier des encres d'impression offset, flexographiques et par gravure, et des matières plastiques, **caractérisée en ce que** la préparation de pigments est amenée selon une forme de particules compactes, et, si nécessaire, est libérée à partir d'un solvant.

11. Préparation de pigments homogène sans formation pulvérulente selon la revendication 1 sous la forme de granules exempts de solvant fluant librement.
